**Europäisches Patentamt**

**European Patent Office**

**Office européen des brevets**

(11) Publication number: **0 123 348**
**A1**

(12) **EUROPEAN PATENT APPLICATION**

(21) Application number: **84200518.3**

(22) Date of filing: **12.04.84**

(51) Int. Cl.³: **H 01 J 29/80**
**G 09 G 1/28, H 01 J 31/10**

(30) Priority: **20.04.83 GB 8310707**

(43) Date of publication of application:
**31.10.84 Bulletin 84/44**

(84) Designated Contracting States:
**DE FR GB IT**

(71) Applicant: **PHILIPS ELECTRONIC AND ASSOCIATED INDUSTRIES LIMITED**
**Arundel Great Court 8 Arundel Street**
**London WC2R 3DT(GB)**

(84) Designated Contracting States:
**GB**

(71) Applicant: **N.V. Philips' Gloeilampenfabrieken**
**Groenewoudseweg 1**
**NL-5621 BA Eindhoven(NL)**

(84) Designated Contracting States:
**DE FR IT**

(72) Inventor: **Knapp, Alan George**
**C/o PHILIPS RESEARCH LABORATORIES Redhill**
**Surrey RH1 5HA(GB)**

(72) Inventor: **Ellis, Harold Watson**
**C/O MULLARD LIMITED Mullard House**
**Torrington Place Londond WC1E 7HD(GB)**

(74) Representative: **Moody, Colin James et al,**
**Philips Electronic and Associated Industries Limited**
**Patent Department Mullard House Torrington Place**
**London WC1E 7HD(GB)**

(54) **Colour display apparatus.**

(57) A display apparatus which comprises a display tube (10) having a channel plate electron multiplier (38) and a penetron screen (40) with an electrode (42) (thereinafter termed the screen electrode) thereon by which an accelerating field is provided between the electron multiplier and the screen.

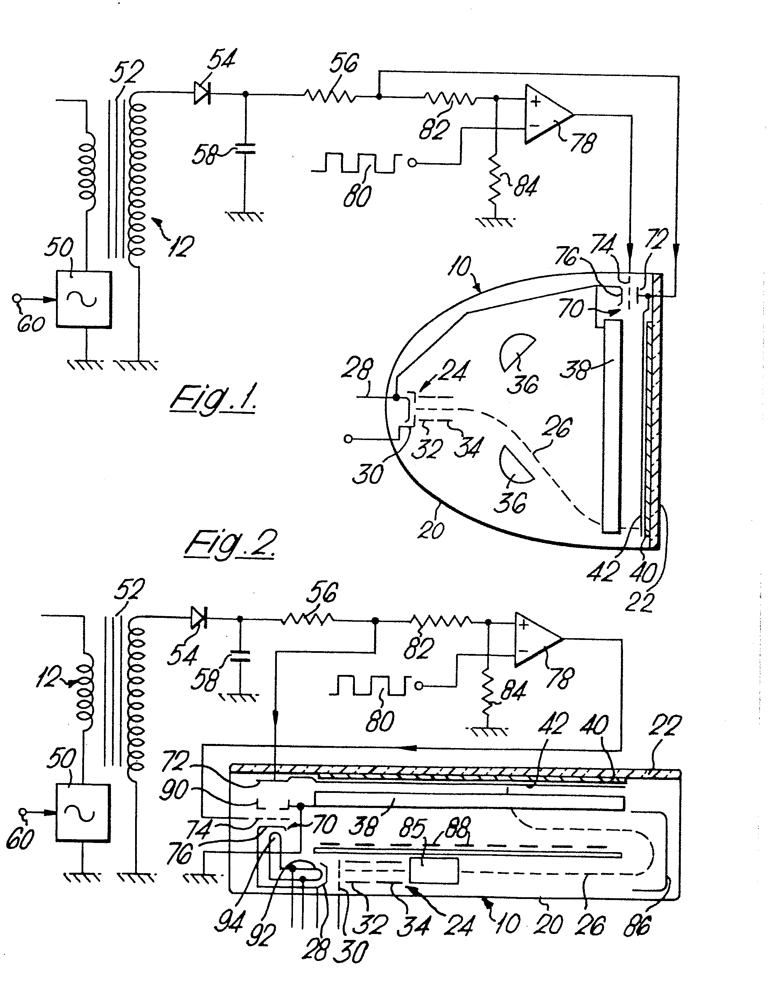

In order to obtain rapid switching of the voltage applied to the screen electrode (42), an EHT power supply has a thermionic valve (70) included within the display tube envelope (20) to shunt current to ground when switching from a high voltage to a low voltage. The anode (72) and cathode (76) of the valve (70) are connected respectively to the screen electrode (42) and the electron gun cathode (28). The valve (70) may be a triode or tetrode. A feedback arrangement is disclosed which enables the voltage on the screen electrode (42) to remain substantially constant in spite of variations in screen current. Figure 1 illiustrated shows an electromagnetically deflected display tube and Figure 2 (not shown) shows an embodiment of an apparatus having a flat, electrostatically deflected, display tube.

_Fig. 1._

"COLOUR DISPLAY APPARATUS"

The present invention relates to a display apparatus comprising colour display tubes including a penetron cathodoluminescent screen and a power supply for switching the post deflection acceleration (PDA) voltage between different values in order to produce the desired colour.

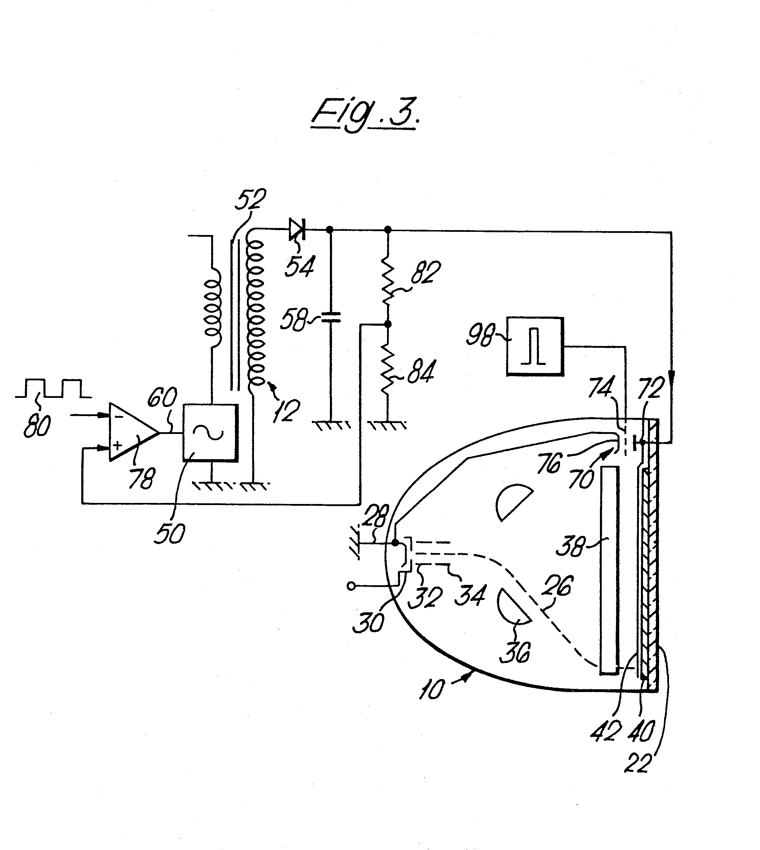

Penetron screens are known and are discussed in an article "Performance of Penetration Colour CRTs in Single-Anode and Dual-Anode Configurations" by G.R. Spencer in Proceedings of the SID Vol. 22/1, 1981, pages 15 to 17.   G.R. Spencer highlights some problems in using penetron screens in single anode cathode ray tubes. As is known different colours are produced using a dual primary colour penetron phosphor by varying the anode to screen voltages of the tube.   One effect illustrated in broken lines in Figure 3 of the Spencer article is that the spot size and thus the line width changes over the range of voltages that can be used.   Accordingly the electron beam has to be refocused if the spot size is to be maintained constant.   Another problem with varying the anode to screen voltages is that in order to maintain a substantially constant picture size then the deflection current has to be varied with screen voltage.   G.R. Spencer proposes reducing the effects of these problems by the anode of the electron gun and the transparent electrode on the phosphor screen being separated into two independent electrodes.   However this dual electrode arrangement produces an increase in line width with increasing beam current and requires an increase in deflection current for increases in screen voltage.

One proposal for separating the addressing of an electron beam from the light and colour generation in a display tube employing a penetron screen is disclosed in British Patent Application No. 8230244.                   This patent specification discloses a single beam display tube comprising a channel plate electron multiplier which comprises a stack of apertured dynodes the holes in which are aligned to form channels.   A low energy electron beam is scanned across the input face of the electron multiplier.   The electron multiplier produces a current multiplied electron beam which is used for light and colour generation.   The cathodoluminescent screen comprises groups of phosphor elements, at least one phosphor element of each group comprising a penetron component with two colour phosphors, say red and green, and another phosphor element, say blue.

Another approach to producing coloured images from a display tube including a channel plate electron multiplier and a penetron cathodoluminescent screen is disclosed in British Patent Specification 1402547.          In Specification 1402547 a continuous two-layer red-green penetron phosphor layer is provided on the faceplate or other optically transparent carrier substrate disposed between the output surface of the electron multiplier and the faceplate.   Additionally a blue light emitting phosphor is provided on a first colour selection electrode carried by the output surface of the electron multiplier and a second colour selection electrode is provided between the green penetron phosphor and the faceplate or its supporting substrate, the red penetron phosphor being closer to the electron multiplier than the green one.   In operation, by varying the field set up between the first and second colour selection electrodes one of the different phosphors can be activated by the electron beam emerging from the channel plate electron multiplier.

When scanning such screens it is necessary to switch rapidly the PDA voltage applied to the screen electrode, which is coextensive with the cathodoluminescent screen, between a low voltage of say + 7kV relative to the output of the channel plate electron multiplier and a high voltage of say + 14kV, otherwise the colour purity of the image will be affected adversely.

Known high voltage circuits frequently comprise a low voltage source which is stepped-up to a high voltage by a transformer and rectifier arrangement or a voltage multiplier of say the Cockroft-Walton type.   Generally a capacitor is connected between the output of the high voltage circuit and a reference voltage point, for example ground.   In operation the voltage at the output terminal can be increased rapidly but the reverse is not always the case because of the time taken for the charge on the capacitor to decrease to its desired level. This problem is generally overcome by discharging the capacitor by suitable switching means such as a thermionic valve or a series combination of high voltage transistors. In both cases the additional circuitry is bulky and/or expensive especially if used with a flat display tube of the type disclosed in British Patent Specification 2101396 having a screen size of the order of 100 mm diagonal and using a high resolution glass matrix electron multiplier.

An object of the present invention is to reduce the size and cost of the power supply to be used with a display tube having a channel plate electron multiplier and a penetron screen.

According to the present invention there is provided a display apparatus comprising in combination a colour display tube having an envelope in which are provided an electron gun for producing an electron beam, a channel plate electron multiplier having input and output surfaces, means for scanning the electron beam across the input surface and a cathodoluminescent screen arranged parallel to, but spaced from the output surface of the electron multiplier, wherein the cathodoluminescent screen comprises at least a two colour penetron phosphor and an electrode (hereinafter termed screen electrode) juxtaposed therewith; and a power supply for providing predetermined potential differences between the output surface of the electron multiplier and said screen electrode, said power supply including a thermionic valve provided within the envelope for facilitating rapid switching of said potential difference between at least two voltages.

In one embodiment of the display apparatus, the thermionic valve has an external anode resistor coupled in series with the power supply which, in use, produces a substantially constant voltage and wherein the thermionic valve is actuated to switch said potential difference between at least two voltages.

In another embodiment the power supply is controlled to produce at least two predetermined voltages and the thermionic valve is actuated to ensure a substantially instantaneous change between a higher voltage and a lower voltage.

The apparatus in accordance with the present invention enables

0123348

the penetron principle of colour selection to be implemented by
simply switching the screen voltage without the need for corrections
to the scan amplitude or gun focus needed in conventional penetron
display tubes not having a channel plate electron multiplier.
Additionally by being able to switch the screen voltage rapidly
then the colour purity of the image is ensured.  By arranging the
thermionic valve within the tube envelope then its additional
volume is insignificant relative to the volume of the display tube
and its cost is low.  The thermionic valve may comprise a triode
or tetrode whose anode is coupled by a low impedance path to the
screen electrode of the display tube.

Additional external connections can be avoided by the valve
cathode being coupled by a low impedance path to the cathode of the
electron gun of the display and in the case of indirectly heated
cathodes then the heaters can be connected in parallel.

There is only one additional external connection which is to
the grid of the triode or to the first (or the control grid) of the
tetrode.  As the signal applied to the grid or first grid is a
switching drive voltage of the order of 10V, then this extra
external connection can comprise an additional pin in the customary
connector provided in display tubes.

The video drive for the display tube may be applied to the
grid of the electron gun rather than to the cathode as is customary
with a conventional colour display tube used for television and
datagraphic display.  In the case of a flat display tube of the
type disclosed in British Patent Specification 2101396 which has
folded electron optics and electrostatic frame deflection it is
important to keep the beam energy constant otherwise the electron
beam path would be altered leading to distortion of the reproduced
image.  This problem is avoided by the video drive being to the
grid of the electron gun.

Conveniently the anode of the thermionic valve may comprise an
extension of the screen electrode thereby reducing the volume of
the valve further.

A feedback connection may be provided between the screen electrode and the power supply whereby the screen voltage is held substantially constant in spite of variations in screen current. This will avoid undesired changes in colour particularly in the case of a bright image.

The channel plate electron multiplier may be of a glass matrix type which is particularly suitable for small high resolution datagraphic display tubes or comprise a stack of separate metal dynodes which is more suitable for bigger display tubes.

The present invention will now be described, by way of example, with reference to the accompanying drawings, wherein:

Figure 1 is a sketch view of a first embodiment of the present invention which includes a magnetically deflected display tube and a triode valve,

Figure 2 is a sketch view of a second embodiment of the present invention which includes a flat, electrostatically deflected display tube and a tetrode valve, and

Figure 3 is a sketch view of a third embodiment of the present invention in which the display tube is similar to that shown in Figure 1.

In the drawings the same reference numerals have been used to indicate the same features.

Referring to Figure 1, the display apparatus comprises a display tube 10 and an EHT power supply 12.

The display tube 10 comprises a metal or glass envelope 20 having an optically transparent faceplate 22. The faceplate 22 may be curved or flat. Within the envelope 20 is provided an electron gun 24 for generating a low voltage, low current electron beam 26. The electron gun 24 comprises a cathode 28, a control grid 30 to which a video drive signal is applied and two anodes 32, 34 for focusing the electron beam 26. An electromagnetic beam deflector 36 is provided in the envelope 20 and serves to scan the electron beam 26 across the input face of a channel plate electron multiplier 38. The output from the electron multiplier 38 is directed onto a cathodoluminescent screen 40 mounted parallel to the electron multiplier 30. If the faceplate 22 is flat and parallel to the output face of the electron multiplier 38 then the screen 40 can be provided on the faceplate 22 as shown otherwise the screen can be provided on an optically transparent, flat support which is mounted parallel to the output face of the electron multiplier 38. The screen 40 comprises a penetron phosphor layer. The penetron layer may comprise a layer of green phosphor on an optically transparent support, for example the faceplate 22, a barrier layer of a non-luminescent material, a thin layer of a red phosphor on the barrier layer and a film of aluminium covering the red phosphor. An electrical connection is made to the aluminium layer by which a beam accelerating voltage is applied. For convenience of description the aluminium layer will be referred to as the screen electrode 42. Another known way of making the penetron layer is termed the onion skin phosphor technique in which green phosphor grains covered by a barrier layer which in turn is covered by red phosphor grains, are deposited on a transparent support. In operation the red phosphor is excited in response to a low excitation voltage and the green phosphor is excited in response to a high excitation voltage.

The electron multiplier 38 may comprise a stack of metal dynodes or a glass matrix one. In the former case the electron multiplier 38 comprises a stack of discrete dynodes which are insulated from each other. Apart from the input dynode which has convergent apertures, the remainder of the dynodes have barrel-shaped apertures therein. If the dynodes are made of a material which is not highly secondary emissive then the apertures may have a layer of secondary emissive material provided in them. In use each dynode is maintained at a voltage which is typically in the range of 200 to 500V higher than the preceding dynode in the stack. The details of the design, construction and detailed operation of the current multiplier 38 are not essential to the understanding of the invention but if more information is necessary then reference may be had by way of example to British Patent Specifications 1434053 and 2023332A details of which are incorporated by way of reference.

In the case of a glass matrix channel plate electron multiplier 38 this comprises thousands of channels of say 12 μm diameter and 15 μm pitch.   The fabrication of glass matrix electron multipliers is generally known and accordingly it will not be described in detail.   However reference can be made to Acta Electronica Volume 14, No. 2, April 1971 for additional information.

The EHT power supply 12 comprises an oscillator 50 whose output is connected to the primary winding of an EHT transformer 52.   The output of the oscillator 50 is substantially constant.   The secondary winding of the transformer 52 is connected via a rectifier 54 and a series resistor 56 to the screen electrode 42.   A smoothing capacitor 58 is connected between the output of the rectifier 54 and a voltage reference point, for example ground.   The junction of the rectifier 54 and the capacitor 58 is connected to the screen electrode 42 by way of a resistor 56 which also serves as the anode resistor for a thermionic valve 70 which is used for switching the screen voltage between a high and low value and vice versa.

In Figure 1 the thermionic valve 70 comprises a triode having an anode 72, a grid 74 and a cathode 76.   The valve 70 is provided within the envelope 20.   As the anode 72 and the electrode 42 are at the same potential then conveniently the anode 72 can comprise an extension of the screen electrode 42 thus avoiding having to provide a separate connection to the anode 72 through the wall of the envelope 20.   The cathode 76 is at the same voltage as the electron gun·cathode 28 and the input side of the channel plate electron multiplier 38 and consequently they can be connected together by low impedance paths.   A separate connection has to be provided to the grid 74.   By applying an appropriate switching voltage to the grid 74 the valve 70 is switched, typically every 10 mS, between two states of conduction such that the screen voltage is held at the required levels.

As it is desirable to maintain the screen voltage constant in spite of changes in screen current due to changes in brightness and picture content, feedback is provided between the anode 72 and the grid 74.   This is done by connecting the output of an operational amplifier (op-amp) 78 to the grid 74.   The switching signal 80 is applied to an inverting input of the op-amp 78 and a divided down portion of the screen/anode voltage is applied to the non-inverting input of the op-amp 78. The divided down portion is derived by a resistive potential divider comprising a feedback resistor 82 and another resistor 84.

Figure 2 illustrates an embodiment of a flat display tube 10 having folded electron optics.   An embodiment of such a flat display tube 10 is described in detail in British Patent Specification 2107396A, details of which are incorporated by way of reference.   Briefly though a low current, low voltage electron beam 26 is produced by the electron gun 24.   It undergoes line scanning using a pair of divergent plates 85 before being turned through.180$^{o}$ by a reversing lens 86.   By means of a series of substantially parallel electrodes 88 the electric field between the electrodes 88 and the input to the channel multiplier 38 is varied to accomplish frame scanning over the input of the channel multiplier 38.   The current multiplied beam from the channel multiplier 38 is accelerated to the screen 40 by the field established between the output of the channel plate electron multiplier 38 and the screen electrode 42.   The channel plate electron multiplier 38 can be of a glass matrix type or separate metal dynode type.

The EHT power supply 12 is as described with reference to Figure 1.

However the thermionic valve 70 included in the tube envelope 20 comprises a tetrode whose second grid 90 is connected to the input of the channel plate multiplier 38 which in turn is connected to a reference potential source, namely ground.   The provision of the second grid 90 reduces the grid drive voltage of the valve 70. The cathodes 28 and 76 are connected together and in turn are connected to a source of - 400V.   As the cathodes 28 and 76 are indirectly heated, then as shown their heaters 92, 94 are connected in parallel.   The video drive for the display tube 10 is applied to the grid 30 of the electron gun.   It is particularly important in this embodiment which has electrostatic beam deflection to keep the beam energy constant which would not be possible if the video drive is applied to the cathode 28.    If the beam current is varied then the reflection of the beam at the reversing lens 86 would vary and also at the frame deflection stage, instead of tracing out a straight line, the line would be deformed as the beam energy varied.    Conveniently the cathode 76 and the first and second grids 74, 90 may comprise a cathode, grid and first anode of a conventional cathode ray tube electron gun.

Referring now to the embodiment shown in Figure 3, the power supply arrangement for this embodiment is different from the embodiments of Figures 1 and 2 in which the output of the oscillator 50 is constant and the switching of the screen voltage is done by the thermionic valve 70.    However in Figure 3, the oscillator output is varied in accordance with the switching waveform 80 applied to the input 60 of the oscillator 50 by way of the op-amp 78.    The junction of the rectifier 54 and the capacitor 58 is connected directly to the screen electrode 42 and the anode 72 of the valve 70.    A pulse source 98 is connected to the grid 74 of the triode 70.    The cathodes 28 and 76 of the electron gun 24 and the valve 70, respectively, are connected to ground.    Feedback to the oscillator 50 from the output of the EHT power supply 12 is provided by the op-amp 78.

In operation the charge on the capacitor 58 varies in accordance with the switching waveform 80.    The change from a low to a high voltage is substantially instantaneous thereby ensuring colour purity over the entire area of the screen 40. However the change from a high to a low voltage is, unless the charge on the capacitor 58 is reduced substantially instantaneously, a slower one due to the exponential decay of the charge on a capacitor 58.    The visible effect of such a decay is that the colour purity of the image would change over the frame, for example it will begin predominantly green and change progressively to red.    In Figure 3 the rapid reduction of the charge on the capacitor 58 is done by the switching-on of the valve 70 by means of the pulse source 98.    Depending on the type of scanning being done, the pulse source 98 produces a pulse at the point where the power supply 12 switches from the high to the low voltage state and in the case of raster scanning this could occur during either a line flyback period or a frame flyback period.

In these embodiments a display apparatus is provided which is able to produce a colour image whose resolution is dependent on both the pitch of the channels in the electron multiplier and the size of the spot from the electron gun. In the case of the glass matrix electron multiplier which has a typical channel pitch of 15 μm, the resolution will in most cases be determined by the size of the spot from the electron beam.

It is to be understood that the illustrated embodiments are not mutually exclusive in that a triode valve can be used in Figure 2 and a tetrode in Figures 1 and 3. Furthermore for convenience of description the screen has been assumed to be entirely a penetron one but it may comprise groups of elements of the type disclosed in British Patent Application 8230244, wherein in each group one type of element is a two colour penetron phosphor and a second type of element is a phosphor element of a third colour. However it should be borne in mind that the electron multiplier disclosed in Application 8230244 is a metal dynode one.

CLAIMS

1.      A display apparatus comprising in combination a colour display tube having an envelope in which are provided an electron gun for producing an electron beam, a channel plate electron multiplier having input and output surfaces, means for scanning the electron beam across the input surface and a cathodoluminescent screen arranged parallel to, but spaced from, the output surface of the electron multiplier, wherein the cathodoluminescent screen comprises at least a two colour penetron phosphor and an electrode juxtaposed therewith; and a power supply for providing predetermined potential differences between the output surface of the electron multiplier and said electrode, characterised in that said power supply includes a thermionic valve provided within the envelope for facilitating rapid switching of said potential difference between at least two voltages.

2.      A display apparatus as claimed in claim 1, characterised in that the thermionic valve has an external anode resistor coupled in series with the power supply which, in use, produces a substantially constant voltage and in that the thermionic valve is actuated to switch said potential difference between at least two voltages.

3.      A display apparatus as claimed in claim 1, characterised in that the power supply is controlled to produce at least two different predetermined voltages and the thermionic valve is actuated to ensure a substantially instantaneous change between a higher voltage and a lower voltage.

4.      A display apparatus as claimed in claim 1, 2 or 3, characterised in that the thermionic valve is a triode having a cathode, grid and an anode which is coupled by a low impedance path to the screen electrode, a switching control voltage being applied, in use, to the grid.

5.      A display apparatus as claimed in claim 1, 2 or 3, characterised in that the thermionic valve is a tetrode having a cathode, first and second grids and an anode which is coupled by a low path to the screen electrode, a switching control voltage being applied, in use, to the first grid and the second grid being at the potential of the input surface of the electron multiplier.

6. A display apparatus as claimed in claim 4 or 5, characterised in that the anode of the thermionic valve is an extension of the screen electrode.

7. A display apparatus as claimed in claim 4, 5 or 6, characterised in that the cathode of the thermionic valve is connected by a low impedance path to the cathode of the electron gun and the video drive for the electron gun is applied to a grid of the electron gun.

8. A display apparatus as claimed in any one of claims 1 to 7, characterised in that a feedback connection is provided between the screen electrode and the power supply whereby the screen voltage is held substantially constant in spite of variations in screen current.

9. A display apparatus as claimed in any one of claims 1 to 8, characterised in that the channel plate electron multiplier comprises a stack of separate metal dynodes.

10. A display apparatus as claimed in any one of claims 1 to 8, characterised in that the channel plate electron multiplier comprises a glass matrix.

11. A display apparatus as claimed in any one of claims 1 to 10, characterised in that the envelope is flat and contains folded electron optics.

_Fig.1._

_Fig.2._

1-II-PHB 32970

# Fig.3.

## EUROPEAN SEARCH REPORT

**European Patent Office**

EP 84200518.3

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. ³) |
| A | DE - A - 1 947 263 (RCA) <br> * Fig. 1-2; page 8, lines 13-36; page 12, lines 11-21 * <br> -- | 1 | H 01 J 29/80 <br> G 09 G 1/28 <br> H 01 J 31/10 |
| A | DE - A1 - 3 215 308 (UNITED TECHNOLOGIES CORP.) <br> * Fig. 1; claims 1-6; pages 6-9 * <br> ---- | 1 | |
| | | | **TECHNICAL FIELDS SEARCHED (Int. Cl. ³)** |
| | | | H 01 J 29/00 <br> G 09 G 1/00 <br> H 01 J 31/00 <br> H 01 J 43/00 |

The present search report has been drawn up for all claims

| Place of search | Date of completion of the search | Examiner |
|---|---|---|
| VIENNA | 07-08-1984 | BRUNNER |